# EUROPÄISCHE PATENTSCHRIFT

(11) **EP 1 420 870 B1**
(45) Veröffentlichungstag und Bekanntmachung des Hinweises auf die Patenterteilung: **13.04.2005**
(21) Anmeldenummer: 02767426.6
(22) Anmeldetag: 24.08.2002
(51) Int. Cl.: B01D 29/15, B29C 47/68

(54) **FILTERVORRICHTUNG, INSBESONDERE FÜR HOCHDRUCKANWENDUNGEN BEI EINER POLYMERSCHMELZE-FILTRATION**
FILTER DEVICE, IN PARTICULAR FOR HIGH-PRESSURE APPLICATIONS IN A MOLTEN POLYMER FILTRATION
DISPOSITIF DE FILTRATION, DESTINE NOTAMMENT A DES APPLICATIONS HAUTE PRESSION POUR LA FILTRATION DE POLYMERE EN FUSION

(30) Priorität: 28.08.2001 DE 10141992
(43) Veröffentlichungstag der Anmeldung: 26.05.2004
(73) Patentinhaber: Hydac Process Technology GmbH, 66538 Neunkirchen (DE)
(72) Erfinder: WNUK, Ralf, 66450 Bexbach (DE); HAUSDORF, Jürgen, 66130 Saarbrücken (DE); SCHORN, Thomas, 66386 St. Ingbert (DE); SANDMEYER, Otto, 66440 Blieskastel (DE); LANG, Norbert, 66440 Blieskastel (DE)
(74) Vertreter: Patentanwälte Bartels und Partner
(86) Internationale Anmeldenummer: PCT/EP2002/009501
(87) Internationale Veröffentlichungsnummer: WO 2003/020396

(56) Entgegenhaltungen:
- WO-A-01/52966
- WO-A-90/00434
- DE-A- 3 326 288

## Beschreibung

Die Erfindung betrifft eine Filtervorrichtung, insbesondere für Hochdruckanwendungen bei einer Polymerschmelze-Filtration, mit einem Einschraubteil, das zum Festlegen der Filtervorrichtung mit einem ersten Gewindeabschnitt versehen ist, das einen zweiten Gewindeabschnitt aufweist zum Festlegen eines Filtermediums, insbesondere in Form eines Metallvlieses, und das für das Metallvlies ein perforiertes Stützrohr aufweist, das an seinem anderen freien Ende mit einem Volumenverdränger versehen ist, wobei das Metallvlies von einem Stützgitter umgeben an zwei Festlegeteilen gehalten ist, die über das Stützgitter auf Abstand gehalten zum einen dem Festlegen am zweiten Gewindeabschnitt des Einschraubteils dienen und zum anderen eine Handhabe für das dahingehende Festlegen darstellen.

Durch die WO 90/00434 ist es bekannt, zwischen dem ersten und dem zweiten Gewindeabschnitt des Einschraubteils ein Ringflansch vorzusehen, an dem sich eine Ringdichtung abstützen kann, die mit ihrer anderen weiteren Ringfläche in Anlage bringbar ist mit dem aufschraubbaren Festlegeteil des Filtermediums. Das dahingehende Festlegeteil ist außenumfangsseitig mit diametral zueinander angeordneten Madenschrauben versehen, die den Aufschraubvorgang erleichtern sollen. Auf der gegenüberliegenden Seite des Filtermediums ist dieses gleichfalls an einem weiteren Festlegeteil festgelegt, wobei dieses gleichfalls außenumfangsseitig diametral einander gegenüberliegende Einschrauböffnungen aufweist, die dem Angriff eines Festlegewerkzeuges dienen, so daß mit dem dahingehenden Festlegewerkzeug und der Befestigungshilfe in Form der Madenschrauben ein nach Möglichkeit torsionsfreier Aufschraubvorgang möglich ist, um dergestalt das Filtermedium, insbesondere in Form eines Metallvlieses, für die spätere Polymerschmelzen-Filtration von Torsionsbeanspruchungen freizuhalten und um das Stützgitter nicht zu schädigen, das das Metallvlies-Filtermedium nach außen hin schützend umgibt. Anschließend wird an diesem Festlegeteil der Volumenverdränger in Richtung des Stützrohres eingeschraubt. Mit der dahingehend bekannten Lösung ist es zwar möglich, bei verschmutztem Filtermedium dieses zusammen mit den Festlegeteilen gegen ein neues Filterelement auszutauschen und die werthaltigen Edelstahlkomponenten in Form des Einschraubteils sowie des Stützrohres am Ein-satzort zu belassen; allein der dahingehende Montagevorgang ist aufgrund der wenig ausgesteiften Filterelement-Konstruktion schwierig zu bewerkstelligen, was den Austauschvorgang kompliziert macht. Des weiteren kann nicht ausgeschlossen werden, daß im Hinblick auf die wenig ausgesteifte Filterelement-Konstruktion beim Festlegevorgang Torsionsspannungen sich im Stützgitter und im Filtermedium aufbauen, so daß insbesondere bei einer Hochdruckanwendung ein Versagen nicht auszuschließen ist.

Durch die DE 43 43 270 A1 ist ein Spinnkopf zum Spinnen von Polymerschmelzen bekannt mit einem Oberteil und einem Düsenblockgehäuse mit einer Düsenplatte mit einer Fläche von maximal 90 cm² und einem Schmelzekanal mit Filterkerze. Dadurch, daß bei der bekannten Lösung in Strömungsrichtung vor jeder Düsenplatte eine einzige Filterkerze angeordnet ist, daß die Filterkerze aus einem von außen nach innen radial durchströmten, nahtlosen Metallgewebe-Zylinder mit am oberen Ende einer Abschlußkappe und am unteren Ende einem sich nach unten verjüngenden konischen Anschlußstück mit Schmelzedurchführung besteht, und daß die die Filterkerze aufnehmende Zone des Schmelzekanals, zumindest im unteren Drittel, derart als Konus ausgebildet ist, daß das konische Anschlußstück der Filterkerze von der Polymerschmelze selbstdichtend in den Konus gepreßt wird, ist weitestgehend eine gleichmäßige Polymerschmelzeströmung unter Ausschaltung von Toträumen erreicht. Am oberen Ende der Filterkerze, die dem genannten Konus an seiner Unterseite gegenüberliegt, ist ein Volumenverdränger vorhanden, der einstückiger Bestandteil eines Stützrohres für das Filtermedium ist. Trotz der sich hieraus ergebenden Versteifung des Gesamtsystems ist nach wie vor eine Anfälligkeit gegenüber Torsionsspannungen gegeben und insgesamt läßt sich der Austauschvorgang für das Filterelement nur schwer bewerkstelligen, wofür eine nahezu vollständige Demontage des bekannten Spinnkopfes notwendig ist.

Durch die WO 01/52966 A1 ist eine Filtervorrichtung mit einem Filtergehäuse nebst einem Filtereinlaß und einem Filterauslaß bekannt sowie einem Filterelement, das einen Filterraum in zwei Teilräume unterteilt. Dadurch, daß bei dieser Lösung ein Teilraum vom Filtereinlaß zum Filterauslaß sich im Querschnitt verjüngt, ist eine konische Ausbildung mindestens eines der beiden Teilräume gegeben, die durch das Filterelement voneinander getrennt sind. Hierdurch läßt sich eine optimale Verweilzeitverteilung innerhalb der Filtervorrichtung erreichen bei gleichmäßiger Strömungsgeschwindigkeit, was insbesondere bei hochviskosen Fluiden, wie Polymerschmelzen, eine wesentliche Rolle spielt. Bei der dahingehend bekannten Lösung umgreift ein als Handhabe ausgebildetes Festlegeteil den Volumenverdränger im Inneren. Da sich jedoch das das Stützrohr umgebende Filtermedium einmal an dem genannten Festlegeteil abstützt und am gegenüberliegenden Ende an Aufnahmeteilen, die mit dem Gehäuse fest verbunden sind, kommt es bei einem Demontagevorgang und Austausch des Filterelementes gleichfalls zu den bereits beschriebenen schädlichen Torsionsspannungen und ein Austausch der Filterelemente benötigt gleichfalls einen hohen Aufwand.

Ausgehend von diesem Stand der Technik liegt der Erfindung die Aufgabe zugrunde, die bekannte Filtervorrichtung dahingehend weiter zu verbessern, daß sie zum einen einen einfachen und raschen Montagevorgang für das auszutauschende Filtermedium erlaubt und daß zum anderen die Filterelement-Konstruktion frei von schädlichen Beanspruchungen, insbesondere in Form von Torsionsbeanspruchungen, gehalten ist. Eine dahingehende Aufgabe löst eine Filtervorrichtung mit den Merkmalen des Patentanspruches 1.

Mit den Merkmalen des Patentanspruches 1 in seiner Gesamtheit wird erreicht, daß der Volumenverdränger einstückiger Bestandteil des Stützrohres ist und daß das als Handhabe ausgebildete Festlegeteil den Volumenverdränger übergreift. Mithin schwächt der Volumenverdränger als Bestandteil des Stützrohres nicht mehr den Betätigungsquerschnitt für das als Handhabe dienende Festlegeteil, so daß dieses sich im Sinne eines Abschluß- oder Deckelteils derart aussteifen läßt, daß insgesamt für das Filterelement als Austausch-Baueinheit ein derart starrer Aufbau erreicht ist, daß beim Festlege- bzw. Aufschraubvorgang für das Filtermedium schädliche Torsionskräfte weitgehend abgehalten werden können. Vielmehr ist eine stabil aufgebaute Einschraubpatrone erreicht und der teure Volumenverdränger kann im Stützrohr bei einem Austauschvorgang bleiben und muß nicht erst umständlich entfernt werden. Im übrigen ist es möglich, mit der erfindungsgemäßen Lösung nur über die Handhabe den Festlege- und einen Austauschvorgang vorzunehmen, so daß am anderen Festlegeteil mit dem Gewindeabschnitt zusätzliche Montagehilfen, wie Madenschrauben od. dgl., völlig entfallen können.

Bei einer bevorzugten Ausführungsform der erfindungsgemäßen Filtervorrichtung ist darüber hinaus vorgesehen, daß zwischen dem ersten und dem zweiten Gewindeabschnitt des Einschraubteils im aufgeschraubten Zustand des ersten Festlegeteils an dessen freier Stirnseite eine Ringdichtung, insbesondere in Form einer Metallvliesdichtung, angeordnet ist. Auf diese Art und Weise kann eine separate Ringdichtung an einem Ringflansch des Einschraubteils, wie bei der bekannten Lösung vorgegeben, vollständig entfallen und dennoch läßt sich dergestalt eine sichere Abdichtung erreichen.

Bei einer weiteren, besonders bevorzugten Ausführungsform der erfindungsgemäßen Filtervorrichtung ist das Filtermedium durch Materialvorsprünge, insbesondere auch durch Einkröpfungen der Festlegeteile, an definierten Festlegestellen an diesen gehalten. Vorzugsweise sind dabei die Festlegestellen integraler Bestandteil der Festlegeteile. Die dahingehende Ausgestaltung kommt einem verwindungsfreien Festlege- und Austauschvorgang für das Filtermedium entgegen, so daß dieses in jedem Fall weitgehend freigehalten wird von schädigenden Materialspannungen.

Bei einer weiteren bevorzugten Ausführungsform der erfindungsgemäßen Filtervorrichtung weist das als Handhabe dienende Festlegeteil einen Spaltabstand in axialer Richtung der Filtervorrichtung zu dem Volumenverdränger auf, wobei der Volumenverdränger mit schrägen Abstützflächen versehen ist, die im eingeschraubten Zustand des einen Festlegeteils in zumindest teilweiser Anlage mit Stützflächen der Handhabe sind. Über die dahingehende Abstütz-Stützflächenanordnung von Volumenverdränger mit Handhabe ist eine Anschlagsicherung gegeben, die sicherstellt, daß das aufzuschraubende Festlegeteil nicht überdreht wird, was gegebenenfalls die Gewindegänge schädigen könnte. Auch ist dergestalt ein Anschlag gebildet, um das Metallvlies als Filtermedium mit seinem Stützgitter von schädlichen Torsionskräften freizuhalten.

Weiter vorteilhafte Ausführungsformen sind Gegenstand der sonstigen Unteransprüche.

Im folgenden wird die erfindungsgemäße Filtervorrichtung anhand zweier Ausführungsformen näher erläutert. Es zeigen dabei in prinzipieller und nicht maßstäblicher Darstellung die
- Fig. 1: teilweise in Ansicht, teilweise im Schnitt eine erste Ausführungsform der Filtervorrichtung;
- Fig.2: einen Schnitt längs der Linie I - I in Fig.1 und
- Fig.3: gleichfalls im Schnitt, gleichfalls in Ansicht, eine Längsdarstellung der zweiten Ausführungsform.

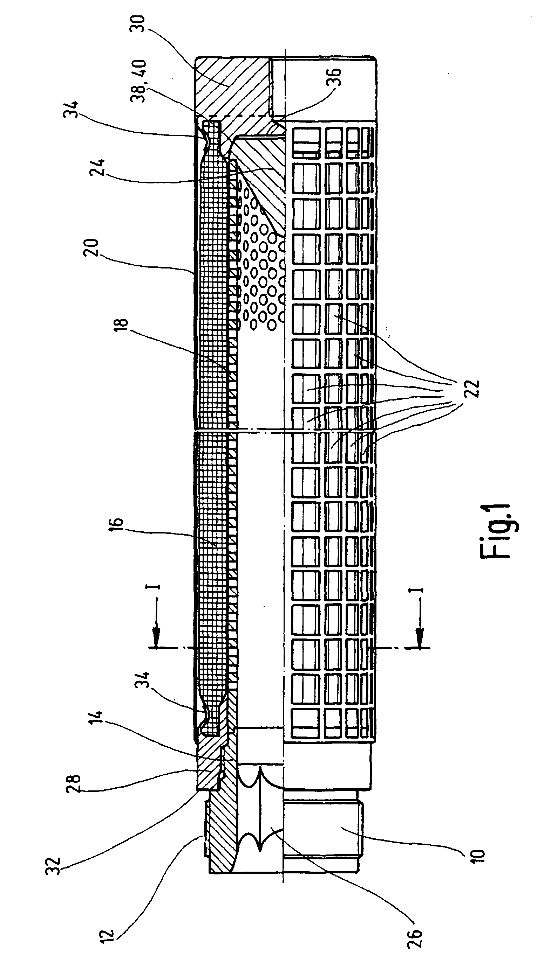

Zunächst wird die erfindungsgemäße Filtervorrichtung anhand der ersten Ausführungsform nach den Fig.1 und 2 näher erläutert. Anschließend wird die zweite Ausführungsform vorgestellt, wobei letztere nur noch insoweit erläutert wird, als sie sich wesentlich von der ersten Ausführungsform unterscheidet.

Die Filtervorrichtung nach den Ausführungsbeispielen ist insbesondere für die Hochdruckanwendung bei einer Polymerschmelze-Filtration vorgesehen. Die Filtervorrichtung weist ein Einschraubteil 10 auf, das zum Festlegen der Filtervorrichtung in einer Gesamt-Filterbaueinheit (nicht dargestellt) mit einem ersten Gewindeabschnitt 12 versehen ist. Das Einschraubteil 10 weist darüber hinaus einen zweiten nachfolgenden Gewindeabschnitt 14 auf zum Festlegen eines Filtermediums 16; im vorliegenden Fall eines für die Polymerschmelze-Filtration geeigneten Metallvlieses. Nach innen hin stützt sich das Filtermedium 16 an einem perforierten Stützrohr 18 ab und nach außen hin ist das Metallvlies bzw. das Filtermedium 16 von einem Stützgitter 20 umgeben mit rechteckförmigen Durchlaßbereichen 22. Das Stützrohr 18 selbst ist an seinem einen freien Ende insbesondere über eine Schweißverbindung fest mit dem Einschraubteil 10 verbunden und weist an seinem anderen freien Ende einen insbesondere gleichfalls über eine Schweißnaht mit ihm verbundenen Volumenverdränger 24 auf. Der Volumenverdränger 24 greift mit einem konischen Fluidführungsteil in das Stützrohr 18 ein und sorgt dergestalt für eine Vergleichmäßigung des Polymerschmelze-Flusses im Inneren des Stützrohres in Richtung der Ausflußöffnung 26 im Inneren des Einschraubteils 10.

Sowohl das Stützgitter 20 als auch das Filtermedium 16 sind an zwei Festlegeteilen 28,30 gehalten, die insbesondere über das Filtermedium 16 auf ihrem festgelegten Abstand zueinander gehalten sind. Das erste Festlegeteil 28 dient dem Festlegen des Filtermediums 16 am zweiten Gewindeabschnitt 14 des Einschraubteils 10, wohingegen das andere zweite Festlegeteil 30 als Handhabe vorgesehen ist für den dahingehenden Festlegevorgang. Die Gesamtkonstruktion von Festlegeteilen 28,30 mit Stützgitter 20 und Filtermedium 16 ist mithin derart aufgebaut, daß im wesentlichen durch Angriff an die Handhabe in Form des zweiten Festlegeteils 30 ein Einschraub- und Abschraubvorgang für die dahingehende Filtereinheit möglich ist. Für einen Filtrationsvorgang der Polymerschmelze, insbesondere bei hohen Drücken, ist die Durchflußrichtung von außen nach innen verlaufend vorgesehen, also zunächst über das Stützgitter 20, dann über das Filtermedium 16 sowie über die Perforierungen im Stützrohr 18 zum Inneren der Filtervorrichtung, wobei die Polymerschmelze dann derart abgereinigt über die Ausflußöffnung 26 zur weiteren Verwendung die Filtervorrichtung verläßt. Ist das Metallvlies als Filtermedium 16 von Verschmutzungen zugesetzt, besteht mithin die Möglichkeit, über das als Handhabe dienende zweite Festlegeteil 30 durch Lösen vom Einschraubteil 10 über das erste Festlegeteil 28 dergestalt ein neues Filtermedium für einen erneuten Einsatz zur Verfügung zu stellen. Da das zweite Festlegeteil 30 den Volumenverdränger 24 im wesentlichen übergreift, kann die dahingehende Handhabe sehr ausgesteift ausgebildet werden, was der Gesamtsteifigkeit für die Austauschkomponenten zugute kommt, so daß sich dergestalt schädliche Torsionsspannungen, insbesondere beim Festlegevorgang, vom Filtermedium mit seinem Stützgitter 20 fernhalten lassen.

Zwischen dem ersten Gewindeabschnitt 12 und dem zweiten Gewindeabschnitt 14 des Einschraubteils 10 ist im aufgeschraubten Zustand des ersten Festlegeteils 28 an dessen freier Stirnseite eine Ringdichtung 32, insbesondere in Form einer Metallvliesdichtung, angeordnet, was den Vorteil hat, daß mit nur einer Dichtung das Filterelement wechsel- und austauschbar gehalten ist und dennoch dergestalt im späteren Einsatz eine sichere Abdichtung erfolgt zwischen dem Inneren der Filtervorrichtung und der Umgebung. Ein ungewollter Polymerschmelzeaustritt ist mithin auch bei ausgesprochenen Hochdruckanwendungen somit mit Sicherheit vermieden.

Das Filtermedium 16 ist durch Materialvorsprünge, insbesondere bei der Ausführungsform nach der Fig.1, durch Einkröpfungen der Festlegeteile 28,30 an definierten Festlegestellen an diesen gehalten. Das an sich nachgiebige Metallvlies als Filtermedium 16 läßt sich somit über Einpreßvorgänge an den Materialvorsprüngen 34 festlegen, wobei die dahingehende Festlegetechnik kostengünstig durchführbar ist und dennoch eine sichere Festlegung erlaubt. Die genannten Festlegestellen selbst sind integraler Bestandteil der Festlegeteile 28,30 und die jeweilige Festlegestelle setzt sich in Verlängerung in dem Festlegeteil 28,30 fort. Letzteres kommt der Gesamtaussteifung des Systems gleichfalls zugute. Wie sich insbesondere aus der Fig.2 ergibt, erstreckt sich das Filtermedium 16 in plissierter Form um das Stützrohr 18 und ist nach außen hin von dem Stützgitter 20 umgeben.

Das als Handhabe dienende zweite Festlegeteil 30 weist einen Spaltabstand 36 in axialer Richtung der Filtervorrichtung zu dem Volumenverdränger 24 auf, wobei der Volumenverdränger 24 mit schrägen Abstützflächen 38 versehen ist, die im eingeschraubten Zustand des ersten Festlegeteils 28 in zumindest teilweiser Anlage mit Stützflächen 40 des zweiten Festlegeteils sind. Dergestalt läßt sich beim Einschraubvorgang auf den Volumenverdränger 24 eine Abstützkraft ausüben, wobei der Volumenverdränger 24 dann auch als Gegenhalt dienen kann, um ein Überdrehen der Gewindeabschnitte im Bereich des ersten Festlegeteils 28 zu vermeiden. Des weiteren lassen sich dann bei der Filtration auftretende Kräfte über die genannten Stützflächen 38,40 sicher in die Grundkonstruktion von Stützrohr 18 mit Einschraubteil 10 ableiten. Letzteres trägt gleichfalls zu einer Aussteifung des Gesamtsystems mit bei, um das Filtermedium 16 selbst von schädlichen Krafteinflüssen freihalten zu können.

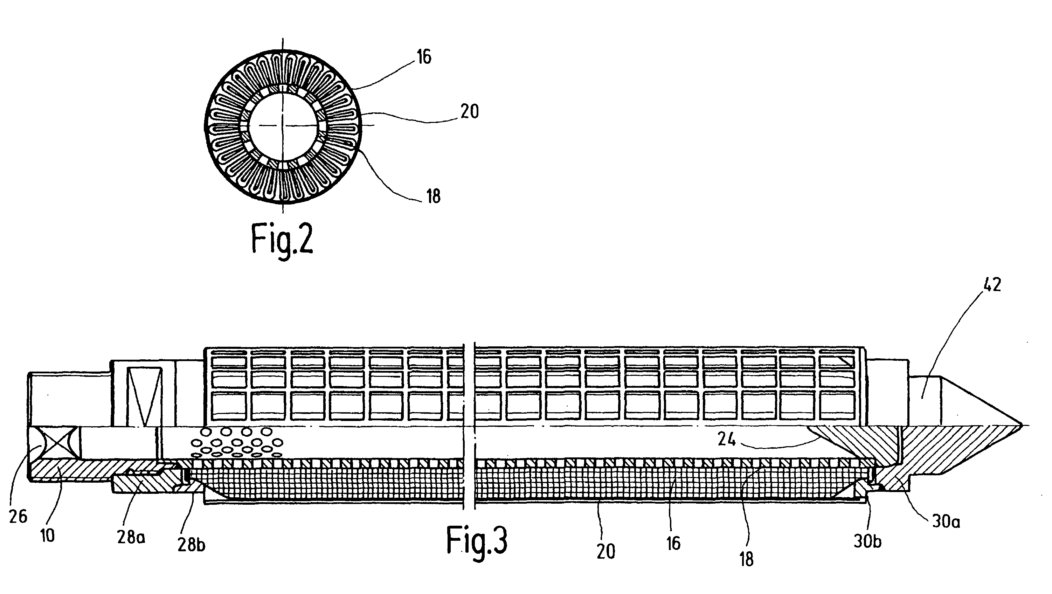

Im folgenden wird nunmehr die zweite Ausführungsform anhand der Fig.3 näher erläutert. Dabei werden für dieselben Bauteile wie für die erste Ausführungsform auch dieselben Bezugszeichen verwendet und die vorliegende Ausführungsform wird nur noch insofern erläutert, als sie sich wesentlich von der ersten Ausführungsform nach den Fig.1 und 2 unterscheidet.

Zunächst ist bei der zweiten Ausführungsform nach der Fig.3 das als Handhabe dienende zweite Festlegeteil 30 mit einem nach außen zur Umgebung hin weisenden Kerzendom 42 versehen. Der dahingehende Kerzendom 42 ermöglicht gegebenenfalls neben dem Festlegen der Filtervorrichtung über das Einschraubteil 10 eine weitere Festlegemöglichkeit innerhalb einer nicht näher dargestellten Gesamt-Filtervorrichtung. Des weiteren bestehen die ersten und zweiten Festlegeteile 28,30 aus jeweils zwei Abschnitten 28a,b,30a,b, wobei die dahingehenden Abschnitte jeweils über eine Schweißnaht fest miteinander verbunden sind. Der jeweilige Abschnitt 28b,30b weist nach innen hin eine Vorkragung auf und das Filtermedium 16 ist an seinen freien Enden jeweils mit einer Auftragsschweißnaht dergestalt verdickt, daß die Schweißnaht den Abschnitt hintergreift, um dergestalt das Filtermedium 16 an den Abschnitten 28b,30b festlegen zu können. Auf diese Art und Weise läßt sich eine sehr schlank aufbauende Gesamt-Filtervorrichtung erreichen, bei der das Stützgitter 20 im wesentlichen den Außendurchmesser der Gesamt-Filtervorrichtung bestimmt.

Beiden Ausführungsformen ist gemeinsam, daß das Einschraubteil 10 mit dem Stützrohr 18 und dem Volumenverdränger 24 eine bestehende Baueinheit an einer Gesamt-Filtervorrichtung ausbildet und daß das Filtermedium 16 mit seinen beiden Festlegeteilen 28,30, das einer Abnutzung unterliegt, als Austauschbaueinheit von der feststehende Baueinheit trennbar ist. Sofern die Filtervorrichtung für die Filtration von Polymerschmelzen dient, werden alle wesentlichen Baukomponenten aus Edelstahlmaterialien ausgebildet.

## Patentansprüche

1. Filtervorrichtung, insbesondere für Hochdruckanwendungen bei einer Polymerschmelze-Filtration, mit einem Einschraubteil (10), das zum Festlegen der Filtervorrichtung mit einem ersten Gewindeabschnitt (12) versehen ist, das einen zweiten Gewindeabschnitt (14) aufweist zum Festlegen eines Filtermediums (16), insbesondere in Form eines Metallvlieses, und das für das Metallvlies ein perforiertes Stützrohr (18) aufweist, das an seinem anderen freien Ende mit einem Volumenverdränger (24) versehen ist, wobei das Metallvlies von einem Stützgitter (20) umgeben an zwei Festlegeteilen (28,30) gehalten ist, die über das Stützgitter (20) auf Abstand gehalten zum einen (28) dem Festlegen am zweiten Gewindeabschnitt (14) des Einschraubteils (10) dienen und zum anderen eine Handhabe für das dahingehende Festlegen darstellen, **dadurch gekennzeichnet, dass** der Volumenverdränger (24) einstückiger Bestandteil des Stützrohres (18) ist, und wobei das als Handhabe ausgebildete Festlegeteil (30) den Volumenverdränger (24) übergreift.

2. Filtervorrichtung nach Anspruch 1, **dadurch gekennzeichnet, daß** zwischen dem ersten (12) und dem zweiten (14) Gewindeabschnitt des Einschraubteils (10) im aufgeschraubten Zustand des ersten Festlegeteils (28) an dessen freier Stirnseite eine Ringdichtung (32), insbesondere in Form einer Metallvliesdichtung, angeordnet ist.

3. Filtervorrichtung nach Anspruch 1 oder 2, **dadurch gekennzeichnet, daß** das Filtermedium (16) durch Materialvorsprünge (34), insbesondere auch durch Einkröpfungen der Festlegeteile (28,30), an definierten Festlegestellen an diesen gehalten ist.

4. Filtervorrichtung nach Anspruch 3, **dadurch gekennzeichnet, daß** die Festlegestellen integraler Bestandteil der Festlegeteile (28,30) sind.

5. Filtervorrichtung nach einem der Ansprüche 1 bis 4, **dadurch gekennzeichnet, daß** das als Handhabe dienende Festlegeteil (30) einen Spaltabstand (36) in axialer Richtung der Filtervorrichtung zu dem Volumenverdränger (24) aufweist und daß der Volumenverdränger (24) mit schrägen Abstützflächen (38) versehen ist, die im eingeschraubten Zustand des einen Festlegeteils (28) in zumindest teilweiser Anlage mit Stützflächen (40) des als Handhabe dienenden zweiten Festlegeteils (30) sind.

6. Filtervorrichtung nach einem der Ansprüche 1 bis 5, **dadurch gekennzeichnet, daß** das als Handhabe dienende Festlegeteil (30) mit einem Kerzendom (42) versehen ist.

7. Filtervorrichtung nach einem der Ansprüche 3 bis 6, **dadurch gekennzeichnet, daß** das eine Festlegeteil (28), das dem Festlegen am zweiten Gewindeabschnitt (14) dient, aus zwei insbesondere über eine Schweißnaht miteinander verbundene Abschnitte (28a,b) besteht, von denen der eine Abschnitt (28a) den Gewindeteil für den zweiten Gewindeabschnitt (14) des Einschraubteils (10) aufweist und der andere Abschnitt (28b) den Materialvorsprung für das Festlegen des Filtermediums (16).

8. Filtervorrichtung nach einem der Ansprüche 1 bis 7, **dadurch gekennzeichnet, daß** das Einschraubteil (10) mit dem Stützrohr (18) und dem Volumenverdränger (24) eine bestehende Baueinheit bildet und daß das Filtermedium (16) mit seinen Festlegeteilen (28,30) die einer Abnutzung unterliegende Austauschbaueinheit ist.

9. Filtervorrichtung nach Anspruch 8, **dadurch gekennzeichnet, daß** die beiden Baueinheiten im wesentlichen aus Edelstahlmaterialien bestehen.

## Claims

1. Filter apparatus, especially for high pressure applications with a polymer melt filtration, with a threaded part (10) equipped with a first threaded section (12) for fixing of the filter apparatus, and a second threaded section (14) for fixing of a filter medium (16), especially in the form of a metal fleece, whereby the same incorporates a perforated support pipe (18) for the metal fleece, which is equipped with a volume displacer (24) at its other free end, whereby the metal fleece is surrounded by a support mesh (20) and held by two fixing parts (28, 30) which are positioned at a distance from one another over the support mesh (20), and which serve firstly (28) *[sic]* for the fixing to the second threaded section (14) of the threaded part (10), and secondly as a handling fitting for the said fixing, **characterised in that** the volume displacer (24) consists of a single-piece component of the support pipe (18), whereby the fixing part (30) serving as the handling fitting straddles the volume displacer (24).

2. Filter apparatus according to Claim 1, **characterised in that** an annular seal (32), especially in the form of a metal fleece seal, is located between the first (12) and the second (14) threaded section of the threaded part (10) in the screwed in condition of the first fixing part (28) on its free facing side.

3. Filter apparatus according to Claim 1 or 2, **characterised in that** the filter medium (16) is held to the fixing parts (28, 30) at defined fixing locations via material projections (34), especially forced projections within the fixing parts (28, 30).

4. Filter apparatus according to Claim 3, **characterised in that** the fixing locations form an integral part of the fixing parts (28, 30).

5. Filter apparatus according to one of the Claims 1 to 4, **characterised in that** the fixing part (30) serving as a handling fitting incorporates a gap (36) in an axial direction of the filter apparatus to the volume displacer (24), and **in that** the volume displacer (24) is equipped with diagonal support surfaces (28) which at least partially abut against the support surfaces (40) of the second fixing part (30) serving as a handling fitting in a screwed in condition of the one fixing part (28).

6. Filter apparatus according to one of the Claims 1 to 5, **characterised in that** the fixing part (30) serving as a handling fitting is equipped with a candle dome (42).

7. Filter apparatus according to one of the Claims 3 to 6, **characterised in that** the one fixing part (28) which serves for the fixing onto the second threaded section (14) consists of two sections (28a, b), connected to one another especially via a weld seam, of which the one section (28a) incorporates the thread part for the second threaded section (14) of the threaded part (10), and the other section (28b) the material projection for the fixing of the filter medium (16).

8. Filter apparatus according to one of the Claims 1 to 7, **characterised in that** the threaded part (10) forms a fixed assembly together with the support pipe (18) and the volume displacer (24), and **in that** the filter medium (16) represents an assembly that can be exchanged when worn together with its fixing parts (28, 30).

9. Filter apparatus according to Claim 8, **characterised in that** the two assemblies consist substantially of stainless steel material.

## Revendications

1. Dispositif de filtration, en particulier pour des applications à haute pression pour la filtration d'une masse fondue de polymère, avec une pièce vissée (10) qui est dotée pour la fixation du dispositif de filtration d'une première section filetée (12), qui comporte une deuxième section filetée (14) pour la fixation d'un milieu filtrant (16), en particulier sous la forme d'un non-tissé métallique, et qui comporte pour le non-tissé métallique un tube de soutien perforé (18), qui est doté à son autre extrémité libre d'un refouleur volumique (24), sachant que le non-tissé métallique, entouré d'une grille de soutien (20), est maintenu sur deux pièces de maintien (28, 30) qui, maintenues à distance par l'intermédiaire de la grille de soutien (20), servent d'une part (28) au maintien sur la deuxième section filetée (14) de la pièce vissée (10) et représentent d'autre part un moyen de manipulation pour la fixation, **caractérisé en ce que** le refouleur volumique (24) est solidaire en une pièce du tube de soutien (18), et sachant que la pièce de maintien (30) configurée comme moyen de manipulation coiffe le refouleur volumique (24).

2. Dispositif de filtration selon la revendication 1, **caractérisé en ce qu'**entre la première (12) et la deuxième (14) section filetée de la pièce vissée (10), à l'état vissé de la première pièce de maintien (28), un joint annulaire (32), en particulier sous la forme d'un joint en non-tissé métallique, est disposé à sa face frontale libre.

3. Dispositif de filtration selon la revendication 1 ou 2, **caractérisé en ce que** le milieu filtrant (16) est maintenu sur les pièces de maintien en des emplacements de fixation définis par des saillies du matériau (34), en particulier aussi par des coudages vers l'intérieur des pièces de maintien (28, 30).

4. Dispositif de filtration selon la revendication 3, **caractérisé en ce que** les emplacements de fixation sont des parties intégrantes des pièces de maintien (28, 30).

5. Dispositif de filtration selon l'une quelconque des revendications 1 à 4, **caractérisé en ce que** la pièce de maintien (30) servant de moyen de manipulation présente dans la direction axiale du dispositif de filtration un écartement en forme de fente (36) par rapport au refouleur volumique (24) et **en ce que** le refouleur volumique (24) est doté de surfaces d'appui obliques (38), qui à l'état vissé de l'une pièce de maintien (28), sont en butée au moins partielle avec des surfaces d'appui (40) de la deuxième pièce de maintien (30) servant de moyen de manipulation.

6. Dispositif de filtration selon l'une quelconque des revendications 1 à 5, **caractérisé en ce que** la deuxième pièce de maintien (30) servant de moyen de manipulation est dotée d'un dôme en forme de bougie (42).

7. Dispositif de filtration selon l'une quelconque des revendications 3 à 6, **caractérisé en ce que** l'une pièce de maintien (28), qui sert au maintien sur la deuxième section filetée (14), consiste en deux sections (28a, b) reliées une à l'autre en particulier par l'intermédiaire d'un cordon de soudure, dont l'une section (28a) comprend la partie filetée pour la deuxième section filetée (14) de la pièce vissée (10) et l'autre section (28b) la saillie de matériau pour la fixation du milieu filtrant (16).

8. Dispositif de filtration selon l'une quelconque des revendications 1 à 7, **caractérisé en ce que** la pièce vissée (10) forme avec le tube de soutien (18) et le refouleur volumique (24) une unité de construction existante et **en ce que** le milieu filtrant (16) avec ses pièces de maintien (28, 30) est l'unité de construction interchangeable soumise à une usure.

9. Dispositif de filtration selon la revendication 8, **caractérisé en ce que** les deux unités de construction consistent essentiellement en matériaux d'acier inoxydable.
